# EUROPÄISCHE PATENTSCHRIFT

(11) **EP 0 828 961 B1**
(45) Veröffentlichungstag und Bekanntmachung des Hinweises auf die Patenterteilung: **25.08.1999**
(21) Anmeldenummer: 96907486.3
(22) Anmeldetag: 15.03.1996
(51) Int. Cl.: F16K 31/06

(54) **DREI-STELLUNGS-MAGNETVENTIL**
THREE-POSITION MAGNETIC VALVE
VANNE MAGNETIQUE A TROIS POSITIONS

(30) Priorität: 26.05.1995 DE 19518902
(43) Veröffentlichungstag der Anmeldung: 18.03.1998
(73) Patentinhaber: HARTMANN + LÄMMLE GMBH & CO. KG, D-71277 Rutesheim (DE)
(72) Erfinder: HERMANN, Jakob, D-72138 Kirchentellinsfurt (DE)
(74) Vertreter: Lutz, Johannes Dieter, Dr.
(86) Internationale Anmeldenummer: EP9601125
(87) Internationale Veröffentlichungsnummer: WO9637720

(56) Entgegenhaltungen:
- EP-A- 0 479 650
- CH-A- 530 564
- FR-A- 1 018 219
- GB-A- 923 515
- US-A- 2 515 029

## Beschreibung

Die Erfindung betrifft ein 3-Stellungs-Magnetventil mit einem einseitig an das Ventilgehäuse angesetzten Doppelhub-Magnetsystem zur elektrisch steuerbaren Umschaltung des Ventils sowie mit einer für eine manuelle Steuerung desselben vorgesehenen Betätigungseinrichtung.

Bei einem solchen Ventil, das für eine "stehende" Anordnung gedacht ist, derart, daß seine P- und T-Versorgungsanschlüsse, sowie im Falle eines 4/3-Wege-Ventils ein A- und ein B-Steueranschluß an der dem Magnetsystem gegenüberliegenden Seite des Ventilgehäuses angeordnet sind, umfaßt das Magnetsystem zwei entlang der zentralen Längsachse des Ventils nebeneinander angeordnete Steuerwicklungen, durch deren individuelle Erregung mit einem Steuerstrom der Anker des Magnetsystems mit dem der Kolben des Ventils formschlüssig bewegungsgekoppelt ist, in alternative, gegenüber einer federzentrierten Mittelstellung, der die Grundstellung (0) des Ventils - in der Regel eine Sperrstellung - entspricht, in in entgegengesetzten Richtungen ausgelenkte Positionen verschiebbar ist, die den alternativen Funktionsstellungen (I) und (II) des Ventils zugeordnet sind; die für eine manuelle Steuerung des Ventils vorgesehene Betätigungseinrichtung, die bei einer Steuerung der Stromversorgung des Ventils als Notbetätigungseinrichtung nutzbar sein soll, mittels derer ein über das Ventil steuerbarer hydraulischer Antrieb ansteuerbar bleiben soll, ist von der dem Ventilgehäuse abgewandten Seite des Magnetsystems aus betätigbar und umfaßt zwei entlang parallel zur zentralen Längsachse des Ventils sowie des Magnetsystems und im Abstand voneinander verlaufender Achsen geführt verschiebbare Betätigungselemente, durch deren individuelle, jeweils in derselben Richtung erfolgende Steuerbetätigung in alternativen - einander entgegengesetzten - Richtungen erfolgende Auslenkungen des Ankers des Doppelhub-Magnetsystems steuerbar sind; hierbei ist die auf das eine Betätigungselement ausgeübte Betätigungskraft direkt als Steuerkraft in den Anker einleitbar, während zur Einleitung der durch manuelle Verschiebung des anderen Betätigungselements erzeugbaren Steuerkraft in den Anker eine Umlenkeinrichtung vorgesehen ist, die die Angriffsrichtung der letzendlich auf den Anker ausübbaren Steuerkraft gegenüber der Angriffsrichtung der die Verschiebung des Betätigungselements vermittelnden Betätigungskraft invertiert.

Bei einem zu Versuchszwecken realisierten, insoweit internen Stand der Technik repräsentierenden 3-Stellungs-Magnetventil der eingangs genannten Art war die Umlenkeinrichtung mit Hilfe zweier rund verzahnter Zahnstangen realisiert, die in diametral einander gegenüberliegenden Eingriffsbereichen mit der Zahnung eines um eine rechtwinklig zur Verschieberichtung der beiden Zahnstangen verlaufende polkernfeste Achse drehbaren Ritzels kämmten, so daß, wenn die eine Zahnstange eine auf den Anker zu gerichtete Verschiebung erfuhr, die andere Zahnstange in der Gegenrichtung verschoben wurde. Eine der beiden Zahnstangen war mit einem ankerseitigen, stabförmigen Fortsatz versehen, der in einen durch flach-Nutförmige Ausdrehung einer durchgehenden, zentralen Bohrung des Ankers geschaffenen, gegenüber dieser Bohrung radial geringfügig erweiterten Innenraum des Ankers hineinragte und mit einem radialen Endflansch versehen war, der mit einem peripheren Randbereich in positiver Überlappung mit den radialen Nutwangen der flachen Innennut des Ankers stand; dieser Endflansch war in einer durch die Wirkung einer vorgespannten Rückstellfeder - federzentrierten - Mittelstellung der Umlenkeinrichtung, als Grundstellung derselben, von beiden Nutwangen in einem axialen Abstand angeordnet, der jeweils mindestens dem Hub entsprach, den der Anker in den beiden alternativen Richtungen der Ansteuerung der einen oder der anderen Steuerwicklung des Doppelhub-Magnetsystems ausführen konnte und bei einer Notbetätigung durch Verschiebung der einen oder der anderen Zahnstange in deren bzw. der entgegengesetzten Bewegungsrichtung in alternative Anlage mit der einen oder der anderen Nutwange gelangen konnte und danach zur Ausführung des Schalt-Hubs des Ankers unter Mitnahme desselben weiterverschiebbar war.

Diese Umlenkeinrichtung ist, ungeachtet ihrer grundsätzlichen Eignung zur Realisierung einer Not-Betätigungseinrichtung eines 3-Stellungs-Ventils, mit einer Reihe von Nachteilen behaftet, die ihre Einsatzmöglichkeiten einschränken und ihren Einsatz unwirtschaftlich erscheinen lassen: die Umlenkeinrichtung ist konstruktiv sehr aufwendig und entsprechend teuer.

Sie ist wegen der im äußeren Polkern des Magnetsystems erforderlichen Einbauten auch mit einem Mindest-Raumbedarf behaftet, der praktisch nicht unterschritten werden kann, so daß die Umlenkeinrichtung allenfalls bei den größten der gängigen Ventil-Nenngrößen realisierbar wäre.

Bei einer manuellen Verschiebung des Ankers mit der Notbetätigungseinrichtung werden stets beide Zahnstangen verschoben, so daß bei einer Betätigung derselben die Reibung beider Zahnstangen in ihren Gleitführungen überwunden werden muß, die erheblich sein kann, da zur Abdichtung zahnungsfreier Führungsabschnitte der Zahnstangen gegenüber Gehäuseelementen des Magnetsystems vorgesehene Dichtringe erhebliche Reibungskräfte entfalten können und insbesondere am Beginn einer Verschiebung zu Stick-Slip-Effekten Anlaß geben können, die gleichsam eine Dosierung der manuellen Betätigung erschweren. In diesem Sinne ungünstig ist auch, daß die Rückstellfeder der Notbetätigungseinrichtung auf einen relativ hohen Betrag an Vorspannung eingestellt sein muß, um eine sichere Rückführung der Notbetätigungseinrichtung in deren Grundstellung zu gewährleisten.

Aufgabe der Erfindung ist es daher, ein 3-Stellungs-Magnetventil mit manuell steuerbarer Notbetätigungseinrichtung zu schaffen, die raumsparend aufgebaut ist, so daß sie auch für Ventile kleiner Nenngrößen geeignet ist, konstruktiv einfach und entsprechend kostengünstig realisierbar ist und eine leichtergängige Steuerung des Ventils bei einer Notbetätigung desselben ermöglicht.

Diese Aufgabe wird erfindungsgemäß durch die im Patentanspruch 1 genannten Merkmale gelöst. Hiernach ist ein in einen Innenraum des Ankers hineinragender, der Grundform nach U-förmiger, formstabiler Führungsbügel vorgesehen, der mit mindestens einem seiner parallel zueinander und parallel zur zentralen Längsachse des Ventils verlaufenden Schenkel in dem den äußeren ventilfernen Polkern des Doppelhub-Magnetsystems enthaltenden Bereich desselben fest verankert ist und auf einem seinem Joch nahen, im Innenraum des Ankers verlaufenden Abschnitt seines einen Führungsschenkels einen diesen koaxial umschließenden und auf diesem geführt verschiebbaren Stützring trägt, der über eine vorgespannte Druck-Wendelfeder, die den sich zwischen dem Stützring und einem Stützschenkel des einen Betätigungselements erstreckenden Abschnitt des einen Bügelschenkels, der durch eine Führungsbohrung des Stützschenkels hindurchtritt, koaxial umgibt, an dem Betätigungselement - wegen der Zusammendrückbarkeit der Druck-Wendelfeder - distanzvariabel abgestützt ist; dieser Stützring ist mit seiner der Druck-feder abgewandten Seite über einen flexiblen Stützmantel, der den sich zwischen dem Stützring und einem Stützschenkel des anderen Betätigungselements erstreckenden Bügelbereich, der das Joch und den an diesen anschließenden Bereich des anderen geraden Führungsschenkels, der ebenfalls durch eine Führungsbohrung des Stützschenkels hindurchtritt, mit engem Gleitsitz umgibt, an diesem anderen Betätigungselement distanzinvariant abgestützt, derart, daß der entlang des Führungsbügels gemessene Abstand des Stützringes von dem zu seiner Verschiebung nutzbaren Betätigungselement gemessene Abstand sich nicht, zumindest nicht in einem beachtlichen Maße, verändern kann. Diesbezüglich geeignete, alternativ oder in Kombination nutzbare Gestaltungen des Stützmantels sind Gegenstand der Ansprüche 4 bis 6.

Der den Stützring aufnehmende Innenraum des Ankers schließt an eine mit der zentralen Längsachse koaxiale Durchgangsbohrung kleineren Durchmessers, durch die der Führungsbügel in den Anker-Innenraum eintritt, über eine radiale Anschlagschulter an, deren axialer Abstand h, in der Grundstellung der Betätigungselemente, von der ihr zugewandten Stirnfläche des Stützringes mindestens einem Hub h' entspricht, den der Anker bei Erregung seiner einen, ventilnahen Steuerwicklung ausführt, um in seine eine, der erregten Stellung II des Ventils zugeordnete Endstellung zu gelangen, in der der Anker am ventilseitigen Polkern des Doppelhubmagnetsystems abgestützt ist.

Durch diese Wahl des Abstandes h des Stützringes von der Anschlagschulter in Relation zu dessen Umschalt-Hub ist sichergestellt, daß der Anker sowohl bei elektrischer Ansteuerung in der genannten Verschieberichtung als auch bei einer manuellen Steuerung derselben mittels der Notbetätigungseinrichtung - gegen die zunehmende Rückstellkraft der Druck-Wendelfedern - in seine Endstellung gelangen kann, ohne an dem Stützring anzuschlagen.

Andererseits ist der Stützschenkel des an dem Stützring über den Stützmantel distanzinvariant abgestützten Betätigungselements, in dessen Grundstellung gesehen, von der ihm zugewandten Ringstirnfläche des Ankers in einem axialen Abstand H₁ angeordnet, der mindestens dem Wert h + h' entspricht und um diesen Mindestbetrag in Richtung auf den Anker zu verschiebbar, während der Stützschenkel des über die Druckfeder an dem Anker abgestützten Betätigungselements, gesehen in dessen Grundstellung, von der ihm zugewandten Ringstirnfläche des Ankers in einem axialen Abstand H2 angeordnet ist, der mindestens dem Wert h' entspricht, und um den Hub H₂ + h' in Richtung auf den Stützring zu verschiebbar.

Durch diese Abstands- und Hub-Relationen ist sichergestellt, daß auch bei einer Notbetätigung des Ventils dessen Anker in die den Funktionsstellungen I und II des Ventils zugeordneten End-Stellungen gebracht werden kann.

Die Notbetätigungseinrichtung des erfindungsgemäßen 3-Stellungs-Ventils ist dadurch, daß die als Rückstellfeder genutzte Druckfeder sich zwischen dem Stützring und einem der Betätigungselemente erstreckt, mit günstig geringem radialem Raumbedarf behaftet und aufgrund ihrer bowdenzugähnlichen Gestaltung auch konstruktiv sehr einfach gestaltet, so daß sie, zum einen, für Ventile aller Nenngrößen geeignet ist und, andererseits, den Preis eines solchen Ventils nicht nennenswert erhöht. Dadurch, daß bei einer Steuerung des Ventils mittels der Notbetätigungseinrichtung jeweils nur ein Betätigungselement derselben verschoben werden muß, ist der bei einer Notbetätigung zu überwindende Reibungswiderstand, verglichen mit der über zwei Zahnstangen betätigbaren Einrichtung gleichsam halbiert, wodurch sowohl die Betätigungskräfte reduziert werden als auch bei einer Betätigung der Übergang zwischen Haft- und Gleitreibung im Bereich einer Ringdichtung das Ansprechverhalten des Ventils weniger beeinflußt.

Unter Beachtung der durch die Merkmale des Anspruchs 2 angegebenen Abstandsrelationen kann der Beitrag der Notbetätigungseinrichtung zur axialen Ausdehnung des Doppelhub-Magnetsystems minimal gehalten werden.

Durch die Merkmale des Anspruchs 3 ist eine konstruktiv besonders einfache, zur Realisierung dieser Abstandsrelationen geeignete Gestaltung des äußeren Polkerns angegeben, an dem beide Betätigungselemente im nicht betätigten Zustand mit ihren Stützschenkeln abgestützt sind.

Zur Erzielung der bestimmungsgemäßen Funktion der Notbetätigungseinrichtung ist es grundsätzlich ausreichend, wenn der die distanzinvariante Abstützung des Stützrings an dem zu seiner Verschiebung vorgesehenen Betätigungselement vermittelnde Stützmantel, im nicht betätigten Zustand der manuell steuerbaren Betätigungseinrichtung, mindestens auf dem das gekrümmte Joch und einen an dieses anschließenden, zum Betätigungselement hin weisenden Bereich der Mindestlänge h umschließenden Längenabschnitt des Führungsbügels flexibel ausgebildet ist und sonst als starres Rohr ausgebildet sein kann, wodurch eine gegebenenfalls vorhandene, wenn auch als unbedeutend anzusehende axiale Zusammendrückbarkeit des Stützmantels weitestmöglich reduziert werden kann, die ansonsten durch einen größeren Verschiebehub des Betätigungselements ausgeglichen werden müßte.

In bevorzugter Gestaltung der Notbetätigungseinrichtung, in der der Stützmantel auf seiner gesamten Länge flexibel ist, ist dieser als Zugfeder mit auf Block liegenden Windungen ausgebildet, die unmittelbar an dem U-förmigen Führungsbügel gleitend anliegen. Bei dieser Gestaltung des Stützmantels ist dieser entlang des Bügels praktisch vollständig inkompressibel - distanzinvariant - und gleichwohl in der Lage, einem engen Joch-Krümmungsradius des Bügels zu folgen.

Dasselbe gilt sinngemäß, wenn der flexible Teil des Stützmantels durch unmittelbar aneinander anliegende, ringförmige Segmente mit vorzugsweise konvexer Krümmung ihrer dem Führungsmantel zugewandten Kontur gebildet ist, so daß sich ein perlenkettenartiger Aufbau desselben ergibt.

Die gemäß Anspruch 7 vorgesehene, zusammenhängend-rohrförmige Gestaltung des radial inneren Teils des magnetisierbaren Mantels des Doppelhub-Magnetsystems erbringt den Vorteil einer erheblichen Vereinfachung der Montage des Magnetsystems am Ventilgehäuse.

Dasselbe gilt sinngemäß mit Bezug auf die Merkmale des Anspruchs 8 für die lagerichtige Fixierung des ventilseitigen Polkerns des Doppelhub-Magnetsystems, mit Bezug auf die Merkmale des Anspruchs 9 für die Montage und Fixierung der Steuerwicklungen und äußerer Teile des magnetisierbaren Mantels des Doppelhub-Magnetsystems und mit Bezug auf die Merkmale des Anspruchs 10 für die lagerichtige Montage- und Fixierung des äußeren Polkerns und der Notbetätigungseinrichtung innerhalb des inneren Mantelrohres.

Die gemäß Anspruch 11 vorgesehene Gestaltung des Doppelhub-Magnetsystems und der Notbetätigungseinrichtung hat den Vorteil, daß sich, bei gleichwohl raumsparendem Aufbau, in axialer Richtung langgestreckte Führungskanäle für Betätigungsstößel der Notbetätigungseinrichtung ergeben, die daher auch, was aus Sicherheitsgründen im Normalbetrieb erwünscht ist, versenkt in den Führungsbohrungen angeordnet sein können, so daß sie nur mittels eines schlanken, in die Führungsbohrungen von außen her einführbaren, stiftförmigen Betätigungswerkzeuges verschoben werden können.

Bei Beachtung der durch die Merkmale des Anspruchs 13 angegebenen Durchmesser-Relationen ist ein müheloses Einführen des U-Führungsbügels einschließlich des Stützringes in den Innenraum des Ankers möglich, bevor die Druckfeder und der Stützmantel auf die Bügelschenkel aufgeschoben werden.

Zum Zweck einer einfachen Gesamtmontage des Magnetventils, mit dem der Kolben mittels der Kolbenstange mit dem Anker axial verschiebefest gekoppelt ist, der entlang der zentralen Längsachse des Ventils koaxial mit derselben in dem zentralen Mantelrohr angeordnet ist, das nach einer koaxialen Ausrichtung der Koppelstange und des Ankers in seine diese Teile koaxial umgebende Anordnung bringbar ist, ist es besonders vorteilhaft, wenn der Anker mit einer zu der Koppelstange hin offenen, außeraxialen Längsbohrung versehen ist, deren zentrale Längsachse in einem radialen Abstand Δr von der zentralen Längsachse des Ventils und der Kurbelstange angeordnet ist, um dessen Betrag die radiale Mindesttiefe einer radialen Innennut der Längsbohrung signifikant größer ist als der höchstens annähernd dem Durchmesser der Bohrung entsprechende Durchmesser eines Koppelflansches des Ventilkolbens. Die axial zug- und schubfeste Verbindung der Koppelstange mit dem Anker kann durch "außeraxiales" Einführen des Flansch-Endes in die Bohrung des Ankers und anschließendes Einrücken des Flansches in die Innennut des Ankers erzielt werden, wobei diese nunmehr koaxiale Anordnung der Koppelstange und des Ankers durch das anschließende Aufschieben des Mantelrohres fixierbar, d.h. der Anker bezüglich des inneren Polkerns und des Kolbens des Ventils dauerhaft exakt zentrierbar ist.

In jeder Gestaltung des Ventils ist es zweckmäßig, wenn die mit der Innennut versehene Bohrung in den Innenraum des Ankers des Magnetsystems mündet, so daß zwischen dem Tankraum des Ventils und dem sich zwischen den Polkern erstreckenden Innenraum ein mit dem Tankraum des Ventils kommunizierender abschnittsweise rohrförmiger Raum vorhanden ist, so daß bei Verschiebungen des Ankers innerhalb des Mantelrohres und/oder der Betätigungselemente der Notbetätigungseinrichtung die zum Druckausgleich erforderlichen Ausgleichsströmungen des Druckmediums ungehindert stattfinden können.

Weitere Einzelheiten des erfindungsgemäßen Magnetventils, das mit beliebiger Anzahl N der schaltbaren Wege als N/3-Magnetventil ausgebildet sein kann, ergeben sich aus der nachfolgenden Beschreibung eines speziellen Ausführungsbeispiels anhand der Zeichnung. Es zeigen:
- Fig. 1: ein erfindungsgemäßes, als 4/3-Wege-Ventil ausgebildetes Magnetventil mit einseitig angeordnetem Doppelhub-Magnetsystem und einer manuell steuerbaren Notbetätigungseinrichtung, im Schnitt längs einer die zentrale Längsachse des Ventils enthaltenden Achsebene von Betätigungselementen der Notbetätigungseinrichtung, etwa im Maßstab 1:4;
- Fig. la: eine vergrößerte Detaildarstellung der Notbetätigungseinrichtung des Ventils gemäß Fig. 1 in einer deren Darstellung entsprechenden, im Maßstab vergrößerten Darstellung,
- Fig. 2: eine Symboldarstellung des Ventils gemäß Fig. 1 zur Erläuterung seiner Funktion und
- Fig. 3: einen Schnitt längs der Ebene III/III der Fig. 1a.

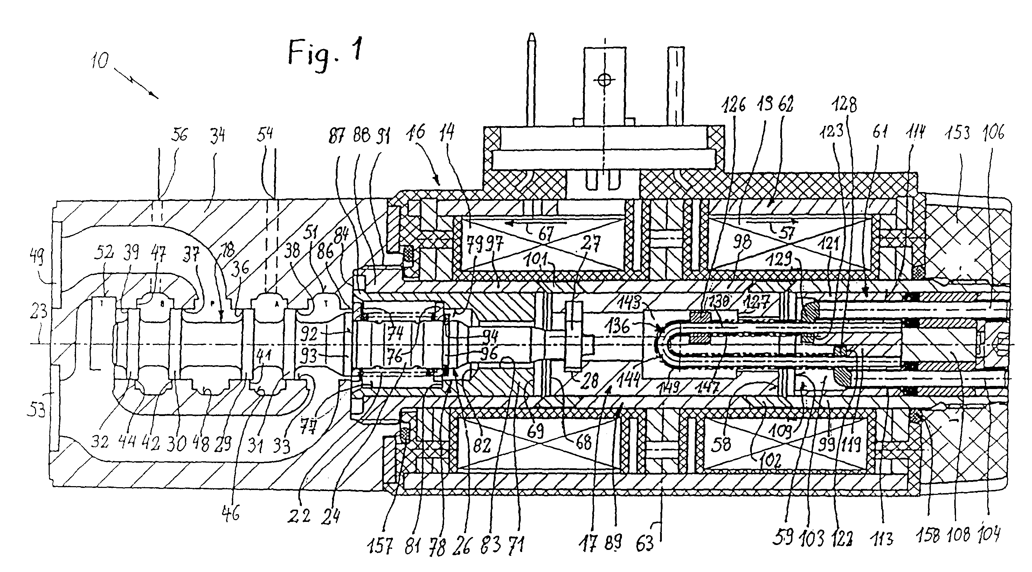

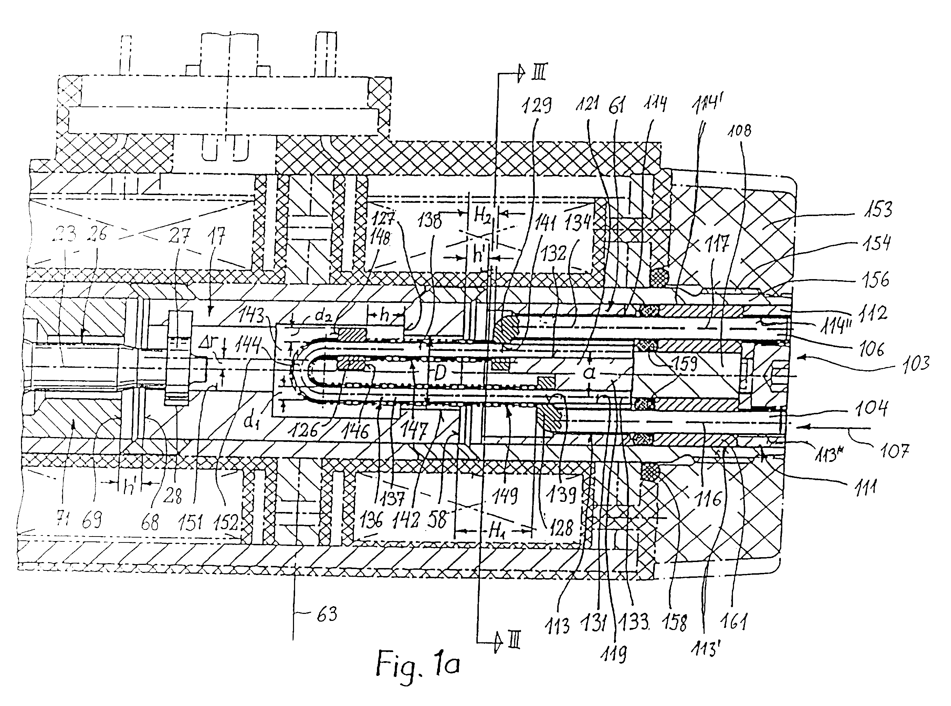

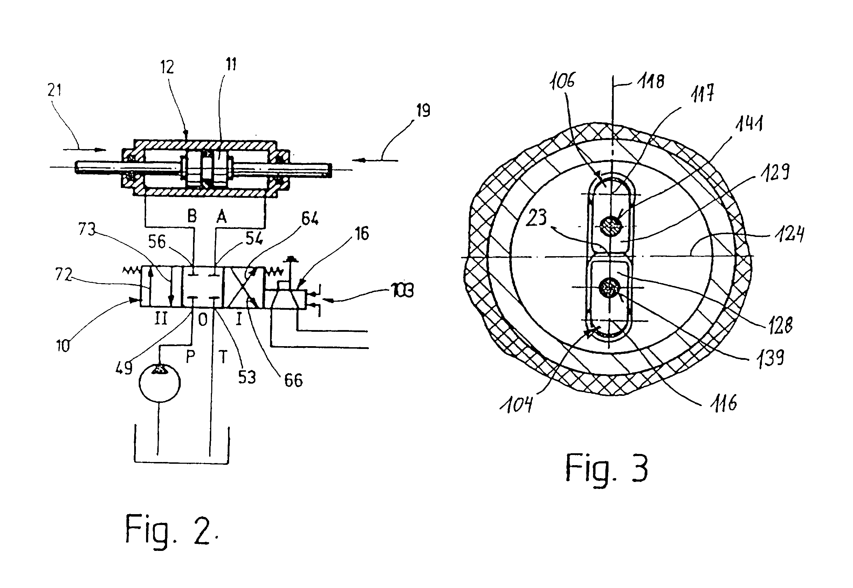

Das in der Fig. 1 insgesamt mit 10 bezeichnete 3-Stellungs-Magnetventil ist als - "lineares" - Kolben-Schieberventil ausgebildet, das, zum Zweck der Erläuterung, als 4/3-Wege-Ventil vorausgesetzt sei, mittels dessen z.B., wie im Schaltbild der Fig. 2 dargestellt, in alternativen Richtungen erfolgende Bewegungen des Kolbens 11 eines doppelt wirkenden - linearen - Hydrozylinders 12 steuerbar sind, der auf Entfaltung gleicher Kräfte in seinen beiden Bewegungsrichtungen ausgelegt ist.

Dieses 4/3-Wege-Magnetventil 10 ist durch alternative Bestromung zweier Steuerwicklungen 13 und 14 eines insgesamt mit 16 bezeichneten Doppelhub-Magnetsystems, in deren stromlosem Zustand der Anker 17 des Doppelhub-Magnetsystems 16 und der mit dem Anker 17 formschlüssig bewegungsgekoppelte, insgesamt mit 18 bezeichnete Kolben des Magnetventils 10 eine der Grundstellung 0 desselben entsprechende Mittelposition einnehmen, in alternative Funktionsstellungen I und II steuerbar, denen die in der Fig. 2 durch die Pfeile 19 und 29 repräsentierten Bewegungsrichtungen 11 des Hydrozylinders 12 entsprechen.

Der Ventilkolben 18 wird im stromlosen Zustand der Steuerwicklungen 13 und 14 des Doppelhub-Magnetsystems 16 durch eine vorgespannte Druck-Wendelfeder 22 in seine - dargestellte -, der Grundstellung 0 des Magnetventils 10 entsprechende Mittelstellung gedrängt. Diese Druck-Wendelfeder 22 umschließt in koaxialer Anordnung mit der zentralen Längsachse 23 des Ventils 10 und seines Doppelhub-Magnetsystems einen ventilseitigen Abschnitt 24 einer mit dem Kolben 18 des Ventils 10 einstückig ausgeführten, insgesamt mit 26 bezeichneten Koppelstange, die durch formschlüssigen Eingriff eines radialen Endflansches 27 mit einer Innennut 28 des der Grundform nach rohrförmigen Ankers 17 des Doppelhub-Magnetsystems 16, das einseitig an das Ventilgehäuse 34 fest anmontiert ist, die zug- und schubfeste Verbindung des Ventilkörpers 18 mit dem Anker 17 des Doppelhub-Magnetsystems 16 vermittelt.

Der Kolben 18 des Ventils 10 hat beim dargestellten, speziellen Ausführungsbeispiel insgesamt vier, von einem stangenförmigen Grundkörper 29 radial abstehende, in definierten axialen Abständen voneinander angeordnete Kolbenflansche 29, 30, 31 und 32 gleichen Durchmessers mittels derer der Kolben 18 in einer zentralen Bohrung 33 des Ventilgehäuses 34 mit dichtendem Gleitsitz axial verschiebbar geführt ist. Durch periphere Randkanten 36, 37 und 38 der Kolbenflansche 29 bis 32 und mit diesen Randkanten korrespondierende, radial innere kreisförmige Kanten 41 bis 44 entlang derer eine A-Steuernut 46 und eine B-Steuernut 47 des Ventilgehäuses 34 an dessen zentrale Bohrung 33 anschließen, wobei zwischen der A-Steuernut 46 und der B-Steuernut 47 des Gehäuses eine P-Versorgungsnut 48 des Gehäuses angeordnet ist, die mit dem P-Versorgungsanschluß 49 des Ventils 10 in ständig kommunizierender Verbindung gehalten ist und ihrerseits - zwischen den zentralen Flanschen 29 und 30 des Kolbens 18 - in die zentrale Gehäusebohrung 33 mündet, und weiter die A-Steuernut 46 und die B-Steuernut 47 zwischen ebenfalls in die zentrale Längsbohrung 33 mündenden T-Anschluß-Nuten 51 und 52 des Gehäuses 34 angeordnet sind, die in ständig kommunizierender Verbindung mit dem T-Versorgungsanschluß 53 des Ventils 10 stehen, kolbenseitige Steuerkanten 36 bis 39 sowie gehäuseseitige Steuerkanten 41 bis 44 gebildet sind, die in der in der Fig. 1 dargestellten, der Grundstellung 0 des Ventils 10 entsprechenden Position seines Kolbens 18 jeweils eine dem Betrage nach gleiche positive Überdeckung haben, so daß der Hochdruck-P-Versorgungsanschluß 49 des Ventils und dessen Tank (T)-Anschluß 53 sowohl gegen den A-Steuerausgang 54, als auch gegen den B-Steuerausgang 56 des 4/3-Wege-Ventils 10 abgesperrt sind.

Bei Erregung der einen, gemäß der Darstellung der Fig. 1 rechten Steuerwicklung 13 des Doppelhub-Magnetsystems 16 erfährt dessen Anker 17 und der mit diesem bewegungsgekoppelte Kolben 18 des Ventils 10 eine Verschiebung in Richtung des Pfeils 57 - nach rechts - die zur Umschaltung des Ventils 10 in dessen Funktionsstellung I führt, wobei der diesbezügliche Umschalt-Hub des Ventilkolbens 18 und des Ankers 17 durch Anlage seiner ventilfernen Ringstirnfläche 58 an einer dieser zugewandten Endstirnfläche 59 eines Polkerns 61 begrenzt ist, der ein Teil des insgesamt mit 62 bezeichneten magnetisierbaren Mantels ist, in den die Steuerwicklungen 13 und 14 in einer bezüglich der rechtwinklig zur zentralen Längsachse 23 des Magnetventils 10 verlaufenden Quermittelebene 63 des Doppelhub-Magnetsystems 16 symmetrischen Anordnung eingebettet sind.

In dieser Funktionsstellung I des Ventils 10 ist die Überlappung der kolbenseitigen Steuerkante 36 des zwischen der A-Steuernut 46 und der P-Versorgungsnut 48 verschiebbaren Kolbenflansches 29 mit der gehäuseseitigen Steuerkante 41, die die einseitige Begrenzung der A-Steuernut 46 bildet, sowie die Überlappung der Steuerkante 39 des zwischen der einen T-Versorgungsnut 52 und der B-Steuernut 47 des Gehäuses 34 verschiebbaren Kolbenflansches 32 mit der gehäuseseitigen Steuerkante 44, die durch den tanknut-seitigen Rand der B-Steuernut 47 gebildet ist, mit definiertem, gleichem Betrag negativ, so daß, entsprechend dem Ventilsymbol der Fig. 2 ein erster Durchflußpfad 64 freigegeben ist, der den P-Versorgungsanschluß 48 mit dem A-Steuerausgang 54 des Ventils 10 verbindet, sowie ein zweiter Durchflußpfad 66, über den der B-Steueranschluß 56 des Ventils mit dem T-Versorgungsanschluß 53 des Ventils 10 verbunden ist.

Bei Erregung der anderen, gemäß der Darstellung der Fig. 1 linken Steuerwicklung 14 des Doppelhub-Magnetsystems 16 erfährt dessen Anker eine Verschiebung in Richtung des Pfeils 67 - gemäß Fig. 1 nach links -, die zur Umschaltung des Ventils 10 in dessen Funktionsstellung II führt, wobei der diesbezügliche Umschalthub des Ventilkolbens 18 und des Ankers 17 durch dessen Anlage seiner ventilnahen Stirnfläche 68 an einer diesen zugewandten Ringstirnfläche 69 eines ventilseitigen, zweiten Polkerns 71 begrenzt ist, der ebenfalls einen Teil des magnetisierbaren Mantels 62 bildet, in den die Steuerwicklungen 13 und 14 eingebettet sind.

In dieser Funktionsstellung II des Magnetventils 10 ist nunmehr die Überlappung der kolbenseitigen Steuerkante 37 des zwischen der B-Steuernut 47 und der P-Versorgungsnut 48 verschiebbaren Kolbenflansches 30 mit der gehäuseseitigen Steuerkante 42, die die einseitige Begrenzung der B-Steuernut 47 bildet, sowie die Überlappung der Steuerkante 38 des zwischen der A-Steuernut 46 und der dieser benachbarten T-Versorgungsnut 51 verschiebbaren Kolbenflansches 31 mit der die tanknutseitige Nutwange der A-Steuernut bildenden, gehäuseseitigen Steuerkante 43 negativ, so daß, entsprechend dem Ventilsymbol der Fig. 2 nunmehr ein Durchflußpfad 72 freigegeben ist, der den P-Versorgungsanschluß 49 mit dem B-Steuerausgang 56 des Ventils verbindet, sowie ein weiterer Durchflußpfad 73, über den der A-Steueranschluß 54 des Ventils 10 mit dessen T-Versorgungsanschluß 53 verbunden ist.

In den beiden - erregten - Funktionsstellungen I und II sind die Beträge der negativen Überlappungen der kolbenseitigen Steuerkanten und der gehäuseseitigen Steuerkanten gleich.

Die im stromlosen Zustand der Steuerwicklungen 13 und 14 des Doppelhub-Magnetventils 16 den Ventilkolben 18 in die Grundstellung 0 des Ventils 10 und den Anker 17 in dessen dargestellte Neutralstellung drängende und in dieser haltende Druck-Wendelfeder 22 erstreckt sich zwischen zwei den kolbennahen Abschnitt 24 der Koppelstange 26 in axialem Abstand voneinander koaxial umgebenden, ringförmigen Federtellern 74 und 76, die beide axial beweglich in einer dem Durchmesser nach größten Bohrungsstufe 77 einer insgesamt dreistufigen, den kolbenseitigen Polkern 71 auf seiner gesamten Länge durchsetzenden Bohrung 78 angeordnet, deren mittlere Bohrungsstufe 79 über eine radiale Anschlagschulter 81 an die die Federteller 74 und 76 aufnehmende Bohrungsstufe 77 anschließt, deren Durchmesser etwas größer ist als der Durchmesser der zentralen Bohrung 33 des Ventilgehäuses 34, in der der Kolben 18 mit seinen Kolbenflanschen 30 bis 32 gleitend verschiebbar geführt ist.

Die mittlere Bohrungsstufe 79 schließt über eine konische Fase 82 an die ankerseitige, dritte, dem Durchmesser nach kleinste Bohrungsstufe 83 an, deren Durchmesser geringfügig größer ist als der Durchmesser des radialen Endflansches 27 der Koppelstange mittels derer der Ventilkolben formschlüssig mit dem Anker 17 axial bewegungsgekoppelt ist.

Der ventilseitige Polkern 71 ist an einer radialen Stufe 84 des Ventilgehäuses 34, die an den Rand 86 der zu der durchgehenden Stufenbohrung 78 des Polkerns 71 hin offenen zentralen Bohrung 33 des Ventilgehäuses 34 anschließt, axial abgestützt und liegt an dieser radialen Stufe mit einem in radialer Richtung nur wenig ausgedehnten Stützflansch 87 an, der durch Einschrauben eines Gewinde-Endflansches 88 eines insgesamt mit 89 bezeichneten Mantelrohres in eine axial an die radiale Stufe 84 des Ventilgehäuses 34 anschließende Gewindebohrung 91 an die radiale Stufe 84 des Ventilgehäuses 34 anpreßbar ist.

In der dargestellten, mit dem stromlosen Zustand beider Steuerwicklungen 13 und 14 verknüpften Grundstellung 0 des Ventils 10 ist der kolbenseitige Federteller 74 durch die unter Vorspannung stehende Druck-Wendelfeder 22 in Anlage mit der in die zentrale Bohrung 33 des Gehäuses anschließenden radialen Stufe 84 desselben gehalten und gleichzeitig der ankerseitige Federteller 76 in Anlage mit der radialen Anschlagschulter 81 der zentralen Stufenbohrung 78 des kolbenseitigen Polkerns 71 gehalten, was der Position größtmöglichen axialen Abstandes der beiden Federteller 74 und 76 entspricht. In dieser Position befindet sich der kolbenseitige Federteller 74 mit seinem radial inneren Bereich auch in Anlage mit einer radialen Stützfläche 92 eines Flansches 93, der den mit der Druck-Wendelfeder 22 koaxialen Abschnitt 24 der Kurbelstange 26 gegen den Kolben 18 des Ventils 10 absetzt und einen Außendurchmesser hat, der etwas kleiner ist als derjenige der Kolbenflansche 29 bis 31 des Ventilkolbens 18. Des weiteren befindet sich in der genannen Position des Ventilkolbens 18 und seiner Koppelstange 26 der ankerseitige Federteller 76 in Anlage mit einem in eine Ringnut der Koppelstange 26 eingesetzten Sprengring 96, wodurch insgesamt die Grundstellung des Ventilkolbens 18 und des Ankers 17 kraft-formschlüssig exakt definiert ist.

Bei einer Erregung der einen Steuerwicklung 13 zur Umschaltung des Ventils 10 in dessen Funktionsstellung I wird der kolbenseitige Federteller 74 durch dessen Abstützung an den Flansch 93 des Koppelstabes 26 von diesem mitgenommen, während der ankerseitige Federteller 76 in seiner Anlageposition mit der radialen Anschlagschulter 81 des kolbenseitigen Polkerns 71 verbleibt. Bei einer Erregung der anderen Steuerwicklung 14 zur Umschaltung des Ventils 10 in dessen Funktionsstellung II hebt der ankerseitige Federteller 76 von der Anschlagschulter 81 ab, desgleichen der Flansch 93 von dem kolbenseitigen Federteller 74, der in seiner Anlageposition mit der radialen Stufe 84 des Ventilgehäuses 34 gehalten bleibt.

Das innere Mantelrohr, mittels dessen der kolbenseitige Polkern 71 am Gehäuse 34 des Ventils 10 festgelegt ist, hat einen in der aus der Fig. 1 ersichtlichen Anordnung diesen Polkern 71 aufnehmenden, ersten Abschnitt 97 aus magnetisierbarem Weicheisen-Material, einen zentralen, zweiten magnetisierbaren Mantelabschnitt 98, der den ebenfalls aus magnetisierbarem Material bestehenden Anker 17 auf den größten Teil der Länge desselben umschließt, und einen dritten magnetisierbaren, äußeren Mantelabschnitt 99, von dem der zweite, ebenfalls aus magnetisierbarem Material bestehende Polkern 61 des Doppelhub-Magnetsystems 16 in ebenfalls gehäusefester Anordnung aufgenommen ist.

Zwischen dem den inneren Polkern 71 umschließenden ersten, inneren Mantelabschnitt 97 und dem zentralen Mantelabschnitt 98 sowie zwischen diesem und dem den äußeren Polkern 61 aufnehmenden Mantelabschnitt 99 sind in axialer Richtung jeweils nur wenig ausgedehnte, mit dem zentralen magnetisierbaren Mantelabschnitt 98 und je einem der beiden anderen magnetisierbaren Mantelabschnitte 97 bzw. 99 durch Löten oder Schweißen fest verbundene Mantelstücke 101 und 102 eingesetzt, die aus nicht magnetisierbarem Material wie Messing oder Edelstahl bestehen und gleichsam "magnetische" Distanzstücke bilden, die bei einer Erregung der jeweiligen Steuerwicklung 13 oder 14 die Ausbildung von Magnetfeldgradienten bewirken, durch die die für das Umschalten des Ventils in seine Funktionsstellungen I und II erforderlichen, auf den Anker 17 wirkenden Kräfte entstehen. Der zentrale magnetisierbare Mantelabschnitt 98 und die aus nicht magnetisierbarem Material bestehenden, kurzen Mantelstücke 101 und 102 sind symmetrisch bezüglich der Quermittelebene 63 des Doppelhub-Magnetsystems 16 ausgebildet, bezüglich derer auch die Anordnung der Steuerwicklungen 13 und 14 symmetrisch ist.

Um das Magnetventil 10 bei Bedarf auch manuell in seine Funktionsstellungen I und II umschalten zu können, ist eine insgesamt mit 103 bezeichnete (Not-)Betätigungseinrichtung vorgesehen, die es erlaubt, durch alternative axiale Verschiebung zweier Betätigungsstößel 104 und 106, die jeweils in derselben, durch den Pfeil 107 (fig. 1a) repräsentierten Richtung erfolgt, das Ventil 10 in seine Funktionsstellung I und II bedarfsgerecht umzuschalten.

Diesbezüglich spezifische Gestaltungen des Doppelhub-Magnetsystems 16 des Ventils 10 sind beim dargestellten, speziellen Ausführungsbeispiel die folgenden:

Innerhalb des äußeren, magnetisierbaren Mantelabschnitts 99 des aus mehreren fest miteinander verbundenen Teilen 97, 101, 98, 102 und 99 zusammengesetzten inneren Mantelrohres 89 des magnetisierbaren Mantels 62 des Doppelhub-Magnetsystems 16 ist durch eine stabile Zwischenwand 108 des äußeren Mantelabschnittes 99 ein innerer, topfförmiger Bereich 109, in den der äußere Polkern 61 eingesetzt ist, gegen einen äußeren topfförmigen Bereich 111 abgegrenzt, in den eine Deckelplatte 112 eingesetzt ist, durch deren Montageverbindung mit dem äußeren Polkern 61 dieser in seiner definierten, gehäusefesten Position festlegbar ist.

Der äußere Polkern 61 hat zwei durchgehende Längsbohrungen 113 und 114, deren zentrale Achsen 116 und 117 in gleichem radialem Abstand von der zentralen Längsachse 23 in einer gemeinsamen Ebene 118 (Fig. 3) mit dieser verlaufen.

Diese Längsbohrungen 113 und 114 durchsetzen Bereiche 119 und 121 unterschiedlicher axialer Ausdehnung des Polkerns 61, die ankerseitig mit radialen Stützflächen 122 bzw. 123 enden, jeweils bis zu der die zentrale Längsachse 23 enthaltenden, rechtwinklig zur Ebene der zentralen Längsachsen 116 und 117 der Bohrungen 113 und 114 markierten Radialebene 124 erstrecken, wobei der axiale Versatz der beiden radialen Stützflächen 122 und 123 gegeneinander einem Leer-Hub h entspricht, den ein Stützring 126, der bei einer Betätigung des die kürzere Bohrung 113 durchsetzenden Betätigungsstößels 104 in Richtung des Pfeils 107 in der dazu entgegengesetzten Richtung ausführen muß, bis er in Anlage mit einer Anschlagschulter 127 des Ankers 17 gelangt, der dann durch weitere Verschiebung des Stützringes 126 in die der Funktionsstellung I des Ventils 10 zugeordnete Position verschiebbar ist.

Die Zwischenwand 108 des äußeren magnetisierbaren Mantelabschnittes 99 und die diesen außenseitig abschließende Deckelplatte 112 sind mit paarweise mit je einer der Längsbohrungen 113 und 114 des äußeren Polkerns 61 fluchtenden durchgehenden Bohrungen 113' und 113" bzw. 114' und 114" versehen, in denen je einer der beiden Betätigungsstößel 104 und 106 axial verschiebbar geführt ist.

Die Betätigungstößel 104 und 106 sind an ihren ankerseitigen Enden mit rechtwinklig zu ihren zentralen Längsachsen 116 und 117 abgewinkelten Stützschenkeln 128 bzw. 129 versehen, die sich jeweils bis in unmittelbarer Nähe der axialen Stufe des äußeren Polkerns 61 erstrecken, um die dessen radiale Stützflächen 122 und 123 axial gegeneinander versetzt sind.

In den Bereichen 119 und 121 unterschiedlicher axialer Ausdehnung des äußeren Polkerns 61 ist dieser mit je einer weiteren durchgehenden Bohrung 131 bzw. 132 versehen, die jeweils zwischen den Führungsbohrungen 113 und 114 für die Betätigungsstößel 104 und 106 und der zentralen Längsachse 23 des Doppelhub-Magnetsystems 16 angeordnet sind, wobei die zentralen Längsachsen 133 und 134 dieser weiteren Durchgangsbohrungen 131 und 132 in derselben Ebene liegen wie die zentralen Längsachsen 116 und 117 der Führungsbohrungen 113 und 114 der Betätigungsstößel 104 und 106.

In diesen weiteren Durchgangsbohrungen 131 und 132 sind die Schenkel-Endabschnitte eines langgestreckten schlanken U-förmig gebogenen, insgesamt mit 136 bezeichneten Stahldrahtbügels fest verankert, dessen zueinander parallele Schenkel 137 und 138 durch mit deren Enden aufnehmende Durchgangsbohrungen 131 und 132 des Polkerns 61 fluchtende Bohrungen 139 und 141 der Stützschenkel 128 bzw. 129 der Betätigungsstößel 104 bzw. 106 hindurchtreten.

Die beiden zueinander parallelen Schenkel 137 und 138 des U-förmigen Drahtbügels 136 treten durch eine mit der zentralen Längsachse 23 des Doppelhub-Magnetsystems 16 koaxiale Bohrung 142 des Ankers 17 in einen gegenüber dieser Bohrung 142 dem Durchmesser nach erweiterten, zentralen Anker-Hohlraum 143 ein, der über die Anschlagschulter 127 an den inneren Rand der Durchgangsbohrung 142 anschließt.

Auf dem sich zwischen dem halbkreisbogenförmig gekrümmten Joch 144 des U-förmigen Bügels 136 und der Anschlagschulter 127 des Ankers 17 geradlinig erstreckenden inneren Abschnitt desjenigen Bügelschenkels 138, der innerhalb der axial längeren Durchgangsbohrung 132 des äußeren Polkerns 61 verankert ist, ist gleitend verschiebbar der Stützring 126 angeordnet.

Zwischen der der Anschlagschulter 127 des Ankers 17 zugewandten Ringstirnfläche 146 des Stützringes 126 und der dieser zugewandten Stützfläche des entlang der zentralen Längsachse 134 der längeren Polkern-Bohrung 132 gesehen dem Stützring 126 gegenüberliegend angeordneten Stützschenkel 129 des Betätigungsstößels 106 erstreckt sich eine vorgespannte Druck-Wendelfeder 147, die den ebenfalls hierzwischen verlaufenden Abschnitt des geraden Schenkels 138 des U-Bügels 136 koaxial umschließend mit ihren Windungen gleitfähig an diesem anliegt.

Zwischen der der Anschlagschulter 127 abgewandten Ringstirnfläche 148 und der ankerseitigen Stützfläche des Stützschenkels 128 des anderen, durch die kürzere Führungsbohrung 131 des äußeren Polkerns 61 hindurchtretenden Betätigungsstößels 104 erstreckt sich, der Krümmung des Jochbereiches 144 des U-Bügels 136 und dessen weiterem Verlauf folgend, eine als Zugfeder gewickelte Wendelfeder 149, deren Windungen, die den gekrümmten Jochbereich 144 und den an diesen anschließenden geradlinigen Schenkel 137 des U-förmigen Bügels gleitfähig an diesem anliegend koaxial umgeben, unmittelbar aneinander anliegen, so daß diese Zugfeder als längen-stabiles, jedoch flexibles Rohr wirkt, bei dessen mittels des U-Bügels 136 geführter, aus einer Betätigung des Betätigungsstößels 104 in Richtung des Pfeils 107 resultierender Verschiebung der Stützring 126 eine dem Betrage nach gleiche Verschiebung in der entgegengesetzten Richtung erfährt, die zunächst in Anlage seiner Ringstirnfläche 146 mit der Anschlagschulter 127 des Ankers 17 und bei weiterer Verschiebung des Betätigungsstößels 104 in Richtung des Pfeils 107 zu einer Mitnahme des Ankers 17 bis in Anlage seiner polkernseitigen Ringstirnfläche 58 mit der dieser zugewandten, ebenfalls ringförmigen Endstirnfläche 59 des äußeren Polkerns 61, d.h. in die mit der Funktionsstellung I des Magnetventils 10 verknüpfte Anker-Position führt.

Im nicht betätigten Zustand des Ventils sind die Stützschenkel 128 und 129 der Betätigungsstempel 104 und 106 in Anlage mit den axial gegeneinander versetzten radialen Stützflächen 122 und 123 des äußeren Polkerns 61 gehalten.

Zu einer Umschaltung des Magnetventils 10 in dessen Funktionsstellung II mittels der Notbetätigungseinrichtung 103 wird deren in der axial längeren Führungsbohrung 132 des äußeren Polkerns 61 geführter Betätigungsstößel 106 ebenfalls in Richtung des Pfeils 107 verschoben, wobei zunächst die Druckfeder 147 zusammengedrückt wird und ihre Vorspannung steigt, bis der Stützschenkel 129 des Betätigungsstößels 106 auf die diesem zugewandte Ringstirnfläche 58 des Ankers 17 auftrifft und dieser durch die weitere axiale Verschiebebewegung des Betätigungsstößels 106 mitgenommen wird, bis die ventilseitige Ringstirnfläche 68 des Ankers 17 in Anlage mit dem ventilseitigen Polkern 71, d.h. in die der Funktionsstellung II des Magnetventils 10 entsprechende Endstellung gelangt.

Im Verlauf dieser Verschiebung des Ankers 17 tritt eine axiale Verschiebung des Stützringes 126 nicht auf, da die als Zugfeder ausgebildete Wendelfeder 149 nicht zusammendrückbar - verkürzbar - ist, wobei der Hub h' des Ankers 17, den dieser bis in diese Endstellung ausführt etwas kleiner ist als der Hub h, den der Stützring bei einer Notbetätigung des Ventils 10 in dessen Funktionsstellung I ausführt, bis er in Anlage mit der Anschlagschulter 127 des Ankers 17 gelangt, wonach dann der Hub, den der Anker 117 bis in seine Endstellung, die der Funktionsstellung I des Ventils entspricht, wieder den Wert h' hat.

Aus Gründen einer einfachen Montage des Doppelhub-Magnetsystems 16 des Ventils 10 einschließlich seiner Notbetätigungseinrichtung 103 ist die Bohrung 142, durch die der Stahldrahtbügel 136 und die dessen parallele Schenkel 137 und 138 auf Teilen deren Längen koaxial umgebenden Wendelfedern 147 und 149 in den zylindrischen Ankerhohlraum 143 hineinragen, geringfügig, d.h. mindestens um einige zehntel Millimeter größer als die Summe aus dem Abstand a der zentralen Längsachsen 133 und 134 der parallelen Schenkel 137 und 138, deren Drahtdicke d₁ und der Manteldicke d₂ des Stützringes 126, wobei vorausgesetzt ist, daß die Summe der Dicken der Federdrähte der Druck-Wendelfeder 147 und der Zug-Wendelfeder 149 kleiner ist als die genannte Dicke des Stützringes 126.

Des weiteren ist die Innennut 28 des Ankers 17 mit der der radiale Endflansch 27 der Koppelstange 26 des Ventilkolbens 18 in axial zug- und schubfestem Eingriff mit dem Anker 17 bringbar ist, in einer von der ventilseitigen Ringstirnfläche 18 des Ankers sich bis in dessen zylindrischen Innenraum 143 erstreckenden Durchgangsbohrung 151 angeordnet, deren zentrale Achse 152 in einem radialen Abstand Δr von der zentralen Achse 23 des Magnetventils 10 verläuft, der mindestens der maximalen Breite desjenigen Randbereiches des Endflansches 27 der Koppelstange 26 entspricht, mit der dieser bei koaxialer Anordnung der Koppelstange 26 und des Ankers 17 in die Verankerungsnut 28 des Ankers 17 radial eingreift, wobei vorausgesetzt ist, daß der Durchmesser dieser außeraxialen Bohrung 151 mindestens dem Durchmesser des Koppelflansches 27 entspricht und diesem etwa gleich ist, d.h. der Unterschied der Durchmesser deutlich kleiner ist als der radiale Abstand der zentralen Längsachse 152 der Bohrung 151 von der zentralen Längsachse 23 des Magnetventils 10.

Das insoweit nach Aufbau und Funktion erläuterte Magnetventil lo ist wie folgt montierbar:

Zuerst wird in den zentralen Anker-Hohlraum 143 der Stahldrahtbügel 136 und der auf dessen einem Schenkel 138 beweglich angeordnete Stützring durch die in fertig montiertem Zustand dem äußeren Polkern 61 zugewandte Durchtrittsbohrung 142 eingeführt. Sodann werden die Druck-Wendelfeder 147 und die Zug-Wendelfeder 149 auf die sie stützenden Schenkel 138 und 137 des Drahtbügels 136 aufgeschoben. Sodann werden die Betätigungsstößel 104 und 106 auf die sie führenden Schenkel 137 und 138 des Drahtbügels 136 aufgeschoben. Hiernach kann der äußere Polkern 61 an den U-förmigen Drahtbügel angesetzt und mit diesem fest verbunden werden. Unabhängig hiervon wird der ventilseitige Polkern 71 in seine die Koppelstange 26 des Ventilkolbens und die einen Abschnitt 24 derselben umgebende Druck-Wendelfeder 22 koaxial umgebende Anordnung gebracht. Die solchermaßen vormontierten Einheiten können sodann durch Einklinken des Endflansches 27 in die Innennut 28 des Ankers 17 in koaxiale, zug- und schubfest miteinander gekoppelte Anordnung gebracht werden. Hiernach wird das zentrale Mantelrohr 89, in dem der Anker 17 axial hin- und herverschiebbar geführt ist, in seine den ventilseitigen Polkern 71, den Anker 17 und den äußeren Polkern 61 umschließende Anordnung gebracht und durch Einschrauben in die Gewindebohrung 91 des Gehäuses 34 des Ventils 10 mit diesem fest verbunden. Sodann wird zweckmäßigerweise die Deckelplatte 112 in den äußeren topfförmigen Bereich 111 des äußeren magnetisierbaren Mantelabschnitts des inneren Mantelrohres 89 eingesetzt und durch nicht dargestellte Zugschrauben, die mit Gewinden des äußeren Polkerns 61 in Eingriff stehen, diesen in Anlage mit der Zwischenwand 108 dieses äußeren Mantelabschnitts 99 drängend, an diesem festgelegt.

Hiernach oder schon zuvor kann die die beiden Steuerwicklungen 13 und 14 mit dem radial äußeren Teil des diese umschließenden magnetisierbaren Mantels 62 umfassende Baueinheit auf das innere Mantelrohr 89 aufgeschoben und bis in Anlage mit dem Gehäuse 34 des Ventils 10 gebracht werden und mittels einer Überwurfmutter 153, die auf ein Außengewinde 154 eines äußeren Endabschnitts 156 des inneren Mantelrohres 89 aufschraubbar ist, zwischen dieser und dem Gehäuse 34 des Ventils 10 eingespannt festgelegt werden.

## Patentansprüche

1. Drei-Stellungs-Magnetventil (10) mit einem einseitig an das Ventilgehäuse (34) angesetzten Doppelhub-Magnetsystem (16), das zwei entlang einer zentralen Längsachse (23) des Ventils nebeneinander angeordnete Steuerwicklungen (13,14) umfaßt, durch deren individuelle Erregung mit einem Steuerstrom ein Anker (17), mit dem ein Kolben (18) des Ventils formschlüssig bewegungsgekoppelt ist, in alternative, gegenüber einer federzentrierten Mittelstellung, der die Grundstellung (0) des Ventils entspricht, in in entgegengesetzten Richtungen ausgelenkte Positionen verschiebbar ist, die den alternativen Funktionsstellungen (I) und (II) des Ventils zugeordnet sind, und mit einer für eine manuelle Steuerung des Ventils vorgesehenen Betätigungseinrichtung (103), die zwei entlang parallel zur zentralen Längsachse des Ventils sowie des Magnetsystems und im Abstand voneinander verlaufender Achsen geführt verschiebbare Betätigungselemente (104,106) umfaßt, durch deren individuelle, jeweils in derselben Richtung erfolgende Steuerbetätigung in alternativen - einander entgegengesetzten - Richtungen erfolgende Auslenkungen des Ankers des Doppelhub-Magnetsystems (16) steuerbar sind, wobei die Betätigungskraft über das eine Betätigungselement (106) direkt in den Anker als Steuerkraft einleitbar ist, während zur Einleitung der durch manuelle Verschiebung des anderen Betätigungselements (104) erzeugbaren Steuerkraft in den Anker eine Umlenkeinrichtung (136,149) vorgesehen ist, die die Angriffsrichtung der auf den Anker ausübbaren Steuerkraft gegenüber der Angriffsrichtung der die Verschiebung des Betätigungselements vermittelnden Betätigungskraft invertiert, wobei das Ventil desweiteren die folgenden Merkmale aufweist:
a) es ist ein in einen Innenraum (143) des Ankers (17) hineinragender, der Grundform nach U-förmiger, formstabiler Führungsbügel (136) vorgesehen, der mit mindestens einem seiner parallelen Schenkel (137, 138), deren zentrale Achsen (133,134) parallel zur zentralen Längsachse (23) des Ventils (10) und des Magnetsystems (16) verlaufen, in einem den äußeren, ventilfernen Polkern (61) des Doppelhub-Magnetsystems (16) enthaltenden Bereich desselben fest verankert ist;
b) der Führungsbügel (136) trägt auf einem seinem Joch (144) nahen, im Innenraum (143) des Ankers (17) verlaufenden Abschnitt seines einen Führungsschenkels (138) einen diesen koaxial umschließenden und auf diesem geführt verschiebbaren Stützring (126), der über eine vorgespannte Druck-Feder (147), die den sich zwischen dem Stützring (126) und einem Stützschenkel (129) des einen Betätigungselements (106) erstreckenden Abschnitt des einen Bügelschenkels (138), der durch eine Führungsbohrung (141) des Stützschenkels (129) des einen Betätigungselementes (106) hindurchtritt, koaxial umgibt, an dem einem Betätigungselement (106) distanzvariabel abgestützt ist;
c) der Stützring (126) ist weiter über einen flexiblen Stützmantel (149), der den sich zwischen dem Stützring (126) und einem Stützschenkel (128) des anderen Betätigungselements (104) erstreckenden Bügelbereich, der das Joch (144) und den an diese anschließenden Bereich des anderen geraden Führungsschenkels (137), der ebenfalls durch eine Führungsbohrung (139) des Stützschenkels (128) des anderen Betätigungselementes (104) hindurchtritt, mit engem Gleitsitz umgibt, an diesem anderen Betätigungselement (104) distanzinvariant abgestützt;
d) der den Stützring (126) aufnehmende Innenraum (143) des Ankers (17) schließt an eine mit der zentralen Längsachse (23) koaxiale Durchgangsbohrung (142) kleineren Durchmessers, durch die der Führungsbügel (136) in den Anker-Innenraum (143) eintritt, über eine radiale Anschlagschulter (127) an, deren axialer Abstand h, in der Grundstellung der Betätigungselemente (104,106), von der ihr zugewandten Stirnfläche (146) des Stützringes (126) mindestens dem Hub h' entspricht, den der Anker (17) bei Erregung seiner einen, ventilnahen, Steuerwicklung (14) ausführt, um in seine eine, der erregten Stellung (II) des Ventils (10) zugeordnete Endstellung zu gelangen, in der der Anker (17) an einem ventilseitigen Polkern (71) des Doppelhubmagnetsystems (16) abgestützt ist;
e) der Stützschenkel (128) des an dem Stützring (126) distanzinvariant abgestützten Betätigungselements (104) ist, in dessen Grundstellung, von der ihm zugewandten Ringstirnfläche (58) des Ankers (17) in einem axialen Abstand H angeordnet, der mindestens dem Wert h + h' entspricht und um diesen Mindestbetrag in Richtung auf den Anker (17) verschiebbar, und der Stützschenkel des über die Druckfeder (147) an dem Anker (17) abgestützten Betätigungselements (106) ist, in dessen Grundstellung, von der ihm zugewandten Ringstirnfläche (58) des Ankers (17) in einem axialen Abstand H₂ angeordnet, der mindestens dem Wert h' entspricht und ist um den Hub H₂ + h' in Richtung auf den Stützring (126) verschiebbar.

2. Magnetventil nach Anspruch 1, **dadurch gekennzeichnet**, daß, in der Mittelstellung des Ankers (17) und der Grundstellung der Betätigungselemente (104,106) der manuell steuerbaren Betätigungseinrichtung (103), der Abstand h des Stützringes (126) von der Anschlagschulter (127) des Ankers (17) des Doppelhub-Magnetsystems (16), sowie der Abstand H des Stützschenkels (129) des über die Druckfeder (147) an dem Stützring (126) abgestützten Betätigungselements (106) von der diesem zugewandten Ringstirnfläche (58) des Ankers (17) annähernd oder exakt den Wert h' haben und der Abstand H1 des Stützschenkels (128) des distanzinvariant an dem Stützring (126) abgestützten Betätigungselements (104) von der diesem zugewandten Stirnfläche (58) des Ankers (17) annähernd oder exakt den Wert 2h' hat.

3. Magnetventil nach Anspruch 1 oder 2, **dadurch gekennzeichnet**, daß eine radiale Stützfläche (122) des äußeren Polkerns (61), an der das distanzinvariant am Stützring (126) abgestützte Betätigungselement (104) in dessen Grundstellung abgestützt ist, von der diesem zugewandten Ringstirnfläche (58) des Ankers (17) in größerem Abstand angeordnet ist als eine radiale Stützfläche (123) des äußeren Polkerns (61), an der das über die Druckfeder (147) an dem Stützring (126) abgestützte Betätigungselement (106) der manuell steuerbaren Betätigungseinrichtung (103) am äußeren Polkern (61) des Doppelhub-Magnetsystems (16) abgestützt ist.

4. Magnetventil nach einem der Ansprüche 1 bis 3, **dadurch gekennzeichnet**, daß der die distanzinvariante Abstützung des Stützrings (126) an dem zu seiner Verschiebung vorgesehenen Betätigungselement (104,128) vermittelnde Stützmantel (147), im nicht betätigten Zustand der manuell steuerbaren Betätigungseinrichtung (103), mindestens auf dem das gekrümmte Joch (144) und einen an dieses anschließenden, zum Betätigungselement (104, 128) hinweisenden Bereich der Mindestlänge h umschließenden Längenabschnitt des Führungsbügels (136) und vorzugsweise auf dem gesamten Bereich zwischen dem Stützring (126) und dem Betätigungselement (104,128) die flexible Gestaltung hat.

5. Magnetventil nach Anspruch 4, **dadurch gekennzeichnet**, daß der flexible Teil des Stützmantels (147) als Zugfeder mit auf Block liegenden Windungen ausgebildet ist.

6. Magnetventil nach Anspruch 4, **dadurch gekennzeichnet**, daß der flexible Teil des Stützmantels (147) durch unmittelbar aneinander anliegende, ringförmige Segmente mit vorzugsweise konvexer Krümmung ihrer dem Führungsbügel zugewandten Kontur gebildet ist.

7. Magnetventil nach einem der Ansprüche 1 bis 6, **dadurch gekennzeichnet**, daß der radial innere, die Steuerwicklungen (13,14) koaxial durchsetzende Teil eines die Steuerwicklungen außen und stirnseitig vollständig einhüllenden magnetisierbaren Mantels (62) des Doppelhub-Magnetsystems (16) einen zentralen Mantelabschnitt (98) aus magnetisierbarem Material, der den Anker (17) auf einem überwiegenden Teil seiner Länge koaxial umschließt, beidseits an diesem Mantelabschnitt (98) fest angesetzte, in axialer Richtung kürzere Distanzringe (101,102) aus nicht magnetisierbarem Material, sowie einen an den ventilseitigen inneren Distanzring (101) fest angefügten Mantelabschnitt (97), der den inneren Polkern (71) koaxial umschließt, und einen an den äußeren Distanzring (102) fest angefügten äußeren Mantelabschnitt (99) aus magnetisierbarem Material umfaßt, der den äußeren Polkern (61) koaxial umschließt, wobei das durch die magnetisierbaren Mantelabschnitte (97, 98,99) und die nicht magnetisierbaren Distanzstücke (101, 102) gebildete Mantelrohr (89) als am Ventilgehäuse (34) festlegbarer Träger für die Steuerwicklungen (13,14) und die weiteren Teile des magnetisierbaren Mantels (62) des Doppelhub-Magnetsystems (16) ausgebildet ist, die eine auf das innere Mantelrohr (89) aufschiebbare und am Gehäuse (34) des Ventils (10) festlegbare Montageeinheit bilden.

8. Magnetventil nach Anspruch 7, **dadurch gekennzeichnet**, daß der ventilseitige Polkern (71) durch Einschrauben eines mit einem Außengewinde versehenen Endflansches (88) des inneren Mantelrohres (89) in eine axiale Gewindebohrung (91) des Ventilgehäuses (34) an eine radiale Stufe (84) des Ventilgehäuses (34) in koaxialer Anordnung mit der zentralen Längsachse (23) des Ventils (10) andrückbar ist.

9. Magnetventil nach Anspruch 7 oder 8, **dadurch gekennzeichnet**, daß die durch die Steuerwicklungen (13,14) und die radial äußeren Elemente des magnetisierbaren Mantels (62) gebildete Montageeinheit mittels einer Überwurfmutter (153), die mit einem an einem äußeren freien Abschnitt (156) des äußeren Mantelabschnitts (99) des inneren Mantelrohres (89) vorgesehenen Außengewinde (154) in kämmendem Eingriff steht, am Ventilgehäuse (34) festlegbar ist.

10. Magnetventil nach einem der Ansprüche 7 bis 9, **dadurch gekennzeichnet**, daß der axial äußere magnetisierbare Mantelabschnitt (99) des inneren Mantelrohres (89) des Doppelhub-Magnetsystems (16) mit einer stabilen Zwischenwand (108) versehen ist, die einen inneren topfförmigen Bereich (109), der den äußeren Polkern (61) aufnimmt, gegen einen äußeren topfförmigen Bereich (111) abgrenzt, in den eine Deckelplatte (112) versenkt einsetzbar ist, durch deren durch Zugschrauben vermittelte Montageverbindung mit dem Polkern (61) dieser in definierter Position in dem inneren Mantelrohr (89) fixierbar ist.

11. Magnetventil nach Anspruch 10, **dadurch gekennzeichnet**, daß der U-förmige Führungsbügel (136) mit seinen beiden parallelen Schenkeln (137,138) in Längsbohrungen (131, 132) des äußeren Polkerns (61) fest verankert ist, deren Längsachsen (133,134) in einer die zentrale Längsachse (23) des Magnetventils (10) enthaltenden Radialebene und in gleichen radialen Abständen (a/2) von dieser verlaufen, und daß die Betätigungselemente langgestreckt-stabförmige Betätigungsstößel (104,106) haben, die in miteinander fluchtenden Bohrungen (113,113' und 113" sowie 114,114' und 114") des äußeren Polkerns (61), der Zwischenwand (108), des äußeren magnetisierbaren Mantelabschnitts (99) des inneren Mantelrohres (89) und der von dessen topfförmigem Bereich (111) aufgenommenen Deckelplatte (112) axial verschiebbar geführt sind, wobei die jeweils miteinander fluchtenden Bohrungen (113,113' und 113" bzw. 114,114' und 114") radial außerhalb der Aufnahmebohrungen (131,132) des Polkerns (61) für die parallelen Schenkel (137,138) des Führungs-U-Bügels (136) mit koplanarem Verlauf ihrer zentralen Längsachsen (116 ,117) mit den zentralen Längsachsen (137,134) der Aufnahmebohrungen (131,132) des äußeren Polkerns (61) angeordnet sind.

12. Magnetventil nach Anspruch 11, **dadurch gekennzeichnet**, daß die freien Enden der Betätigungsstößel (104,106) versenkt in den Führungsbohrungen (113", 114") des Deckelteils (112) angeordnet sind.

13. Magnetventil nach Anspruch 11 oder Anspruch 12, **dadurch gekennzeichnet**, daß der Durchmesser D einer Durchgangsbohrung (142) des Ankers (17), durch die der Führungsbügel (136) in den dieser gegenüber radial erweiterten Innenraum (143) des Ankers (17) eintritt, der Beziehung D > a + d₁ + d₂ genügt, in der mit a der Abstand der zentralen Achsen (133, 134) der Verankerungsbohrungen (131,132) für die parallelen Schenkel (137,138) des Führungsbügels (136), mit d₁ deren Durchmesser und mit d₂ die radiale Dicke des Stützrings (126) bezeichnet sind und vorausgesetzt ist, daß die Summe der Drahtdicke der Druck-Feder (137) und der radialen Dicke des das Joch (144) des Führungsbügels (136) umschließenden Stützmantels (149) kleiner ist als die radiale Dicke d₂ des Stützringes (126).

14. Magnetventil nach einem der Ansprüche 1 bis 13, bei dem der Kolben (18) des Ventils (10) mittels einer Koppelstange (26) mit dem Anker (17) des zur elektrischen Betätigung vorgesehenen Magnetsystems (16) formschlüssig axial verschiebefest gekoppelt ist, wobei der Anker (17) und die Koppelstange (26) in koaxialer Anordnung bezüglich einer zentralen Längsachse (23) des Ventils (10) in einem Rohr (89) angeordnet ist, das erst nach einer koaxialen Ausrichtung der Koppelstange (26) und des Ankers (17) in die diese Teile koaxial umgebende Anordnung bringbar ist, **dadurch gekennzeichnet**, daß der Anker (17) mit einer zu der Koppelstange (26) hin offenen, außeraxialen Längsbohrung (151) versehen ist, deren zentrale Längsachse (152) in einem radialen Abstand (Ar) von der zentralen Längsachse (23) des Ventils (10) verläuft, daß in der Längsbohrung (151) eine radiale Innennut (28) angeordnet ist, deren radiale Tiefe mindestens dem radialen Abstand (Ar) der Längsachsen (23 und 152) entspricht, und daß die Koppelstange (26) einen mit der Innenut (28) in formschlüssigen Eingriff bringbaren Koppelflansch (27) hat, dessen Durchmesser höchstens dem Durchmesser der Längsbohrung (151) entspricht und diesem annähernd gleich ist.

15. Magnetventil nach Anspruch 14, **dadurch gekennzeichnet**, daß die mit der Innennut (28) versehene Bohrung (151) in den Innenraum (143) des Ankers (17) des Magnetsystems mündet.

## Claims

1. Three-position magnetic valve (10) having, attached at one end to the valve housing (34), a double-lift magnet system (16) comprising two control windings (13, 14), which are disposed next to one another along a central longitudinal axis (23) of the valve and through the individual excitation of which by a control current an armature (17), to which a piston (18) of the valve is positively motionally coupled, is displaceable into alternative positions which are offset in opposite directions relative to a spring-centred middle position, which corresponds to the basic setting (0) of the valve, and are associated with the alternative functional settings (I) and (II) of the valve, and having for the purpose of manual control of the valve an operating device (103) comprising two operating elements (104, 106) which are displaceable in a guided manner along axes, which extend parallel to the central longitudinal axis of the valve and of the magnet system and at a distance from one another, wherein excursions of the armature of the double-lift magnet system (16) effected in alternative - mutually opposing - directions are controllable through the individual control operation of said operating elements which is effected in each case in the same direction, wherein the operating force is introducible via the one operating element (106) directly into the armature as a control force, while for introduction into the armature of the control force producible through manual displacement of the other operating element (104) a reversing device (136, 149) is provided, which inverts the direction of application of the control force exertable upon the armature relative to the direction of application of the operating force effecting the displacement of the operating element, wherein the valve moreover has the following features:
a) a substantially U-shaped, dimensionally stable guide bow (136) projecting into an interior space (143) of the armature (17) is provided, which is firmly anchored by at least one of its parallel limbs (137, 138), the central axes (133, 134) of which extend parallel to the central longitudinal axis (23) of the valve (10) and of the magnet system (16), in a region of the double-lift magnet system (16) containing the outer valve-remote pole core (61) of the latter;
b) the guide bow (136) on a portion of its one guide limb (138) disposed close to its yoke (144) and extending in the interior space (143) of the armature (17) carries a supporting ring (126), which coaxially encloses and is displaceable in a guided manner on said portion and is supported in a distance-variable manner against the one operating element (106) via a preloaded compression spring (147) which coaxially surrounds the portion, which extends between the supporting ring (126) and a supporting limb (129) of the one operating element (106), of the one bow limb (138) which passes through a guide bore (141) of the supporting limb (129) of the one operating element (106);
c) the supporting ring (126) is further supported in a distance-invariable manner against the other operating element (104) via a flexible supporting enclosure (149), which with a snug fit surrounds the bow region, which extends between the supporting ring (126) and a supporting limb (128) of said other operating element (104) and comprises the yoke (144) and the yoke-adjoining region of the other straight guide limb (137), which likewise passes through a guide bore (139) of the supporting limb (128) of the other operating element (104);
d) the interior space (143) of the armature (17) receiving the supporting ring (126) adjoins a smaller-diameter through-bore (142), which is coaxial with the central longitudinal axis (23) and through which the guide bow (136) passes into the armature interior space (143), via a radial stop shoulder (127), the axial distance h of which from the opposing end face (146) of the supporting ring (126) in the basic setting of the operating elements (104, 106) corresponds at least to the lift h', which the armature (17) upon excitation of its one valve-adjacent control winding (14) executes in order to arrive in its one end position, which is associated with the excited setting (II) of the valve (10) and in which the armature (17) is supported against a valve-side pole core (71) of the double-lift magnet system (16) ;
e) the supporting limb (128) of the operating element (104), which is supported in a distance-invariable manner against the supporting ring (126), is in the basic setting of said operating element disposed at an axial distance H₁ from the opposing annular end face (58) of the armature (17) corresponding at least to the value h + h' and is displaceable by said minimum amount in the direction of the armature (17), and the supporting limb of the operating element (106), which is supported via the compression spring (147) against the armature (17), is in the basic setting of said operating element disposed at an axial distance H₂ from the opposing annular end face (58) of the armature (17) corresponding at least to the value h' and is displaceable by the lift H₂ + h' in the direction of the supporting ring (126).

2. Magnetic valve according to claim 1, **characterized in** that, in the middle setting of the armature (17) and in the basic setting of the operating elements (104, 106) of the manually controllable operating device (103), the distance h of the supporting ring (126) from the stop shoulder (127) of the armature (17) of the double-lift magnet system (16) as well as the distance H₂ of the supporting limb (129) of the operating element (106), which is supported via the compression spring (147) against the supporting ring (126), from the annular end face (58) of the armature (17) facing said operating element have approximately or exactly the value h' and the distance H1 of the supporting limb (128) of the operating element (104), which is supported in a distance-invariable manner against the supporting ring (126), from the end face (58) of the armature (17) facing said operating element has approximately or exactly the value 2h'.

3. Magnetic valve according to claim 1 or 2,
**characterized in** that a radial supporting surface (122) of the outer pole core (61), against which surface the operating element (104) supported in a distance-invariable manner against the supporting ring (126) is supported in its basic setting, is disposed at a greater distance from the annular end face (58) of the armature (17) facing said operating element than a radial supporting surface (123) of the outer pole core (61), at which surface the operating element (106), which is supported via the compression spring (147) against the supporting ring (126), of the manually controllable operating element (103) is supported against the outer pole core (61) of the double-lift magnet system (16).

4. Magnetic valve according to one of claims 1 to 3, **characterized in** that the supporting enclosure (147), which effects the distance-invariable support of the supporting ring (126) against the operating element (104, 128) provided for its displacement, in the non-operated state of the manually controllable operating device (103) has the flexible configuration at least along the portion of the length of the guide bow (136), which encloses the curved yoke (144) and a yoke-adjoining region of minimum length h directed towards the operating element (104, 128), and preferably along the entire region between the supporting ring (126) and the operating element (104, 128).

5. Magnetic valve according to claim 4, **characterized in** that the flexible part of the supporting enclosure (147) takes the form of a tension spring having closely wound turns.

6. Magnetic valve according to claim 4, **characterized in** that the flexible part of the supporting enclosure (147) is formed by annular segments lying immediately adjacent to one another and having a preferably convex curvature of their contour directed towards the guide bow.

7. Magnetic valve according to one of claims 1 to 6, **characterized in** that the radially inner part, which coaxially penetrates the control windings (13, 14), of a magnetizable enclosure (62) of the double-lift magnet system (16), which totally envelops the outside and ends of the control windings, comprises a central enclosure portion (98) made of magnetizable material which coaxially encloses the armature (17) along a major part of its length, distance rings (101, 102) made of non-magnetizable material which are firmly attached at both ends to said enclosure portion (98) and shorter in axial direction, as well as an enclosure portion (97), which is firmly joined to the valve-side inner distance ring (101) and coaxially encloses the inner pole core (71), and an outer enclosure portion (99) made of magnetizable material which is firmly joined to the outer distance ring (102) and coaxially encloses the outer pole core (61), wherein the enclosing tube (89) formed by the magnetizable enclosure portions (97, 98, 99) and by the non-magnetizable distance pieces (101, 102) is designed as a carrier, which is fastenable to the valve housing (34), for the control windings (13, 14) and the further parts of the magnetizable enclosure (62) of the double-lift magnet system (16), which form an assembly unit which is slidable onto the inner enclosing tube (89) and fastenable to the housing (34) of the valve (10).

8. Magnetic valve according to claim 7, **characterized in** that the valve-side pole core (71) through screwing of an externally threaded end flange (88) of the inner enclosing tube (89) into an axial threaded bore (91) of the valve housing (34) is pressable against a radial step (84) of the valve housing (34) in a coaxial arrangement with the central longitudinal axis (23) of the valve (10).

9. Magnetic valve according to claim 7 or 8,
**characterized in** that the assembly unit formed by the control windings (13, 14) and by the radially outer elements of the magnetizable enclosure (62) is fastenable to the valve housing (34) by means of a union nut (153), which is in meshing engagement with an external thread (154) provided on an outer free portion (156) of the outer enclosure portion (99) of the inner enclosing tube (89).

10. Magnetic valve according to one of claims 7 to 9,
**characterized in** that the axially outer magnetizable enclosure portion (99) of the inner enclcsing tube (89) of the double-lift magnet system (16) is provided with a stable partition (108) separating an inner pot-shaped region (109), which receives the outer pole core (61), from an outer pot-shaped region (111), into which is insertable in a countersunk manner a cover plate (112), which in the course of assembly is connected by means of tension bolts to the pole core (61) with the result that the latter is fixable in a defined position in the inner enclosing tube (89).

11. Magnetic valve according to claim 10, **characterized in** that the U-shaped guide bow (136) is firmly anchored by its two parallel limbs (137, 138) in longitudinal bores (131, 132) of the outer pole core (61), the longitudinal axes (133, 134) of which bores extend in a radial plane containing the central longitudinal axis (23) of the magnetic valve (10) and at identical radial distances (a/2) from said longitudinal axis, and that the operating elements have elongate rod-shaped operating plungers (104, 106), which are guided in an axially displaceable manner in mutually aligned bores (113, 113' and 113" as well as 114, 114' and 114") of the outer pole core (61), the partition (108), the outer magnetizable enclosure portion (99) of the inner enclosing tube (89) and the cover plate (112) received by the pot-shaped region (111) of the latter, wherein the in each case mutually aligned bores (113, 113' and 113" as well as 114, 114' and 114") are disposed radially outside of the location bores (131, 132) of the pole core (61) for the parallel limbs (137, 138) of the U-shaped guide bow (136) with a coplanar course of their central longitudinal axes (116, 117) with the central longitudinal axes (137, 134) of the location bores (131, 132) of the outer pole core (61).

12. Magnetic valve according to claim 11, **characterized in** that the free ends of the operating plungers (104, 106) are arranged countersunk in the guide bores (113", 114") of the cover part (112).

13. Magnetic valve according to claim 11 or claim 12, **characterized in** that the diameter D of a through-bore (142) of the armature (17), through which the guide bow (136) passes into the, relative to said through-bore, radially widened interior space (143) of the armature (17), meets the relationship D > a + d₁ + d₂, in which a is the distance between the central axes (133, 134) of the anchoring bores (131, 132) for the parallel limbs (137, 138) of the guide bow (136), d₁ is their diameter and d₂ is the radial thickness of the supporting ring (126) and given that the sum of the wire thickness of the compression spring (137) and of the radial thickness of the supporting enclosure (149) enclosing the yoke (144) of the guide bow (136) is less than the radial thickness d₂ of the supporting ring (126).

14. Magnetic valve according to one of claims 1 to 13, in which the piston (18) of the valve (10) is coupled positively in an axially non-displaceable manner by means of a coupling rod (26) to the armature (17) of the magnet system (16) provided for electrical operation, wherein the armature (17) and the coupling rod (26) are disposed in a coaxial arrangement relative to a central longitudinal axis (23) of the valve (10) in a tube (89), which only after a coaxial alignment of the coupling rod (26) and the armature (17) is movable into the arrangement coaxially surrounding eaid parts, **characterized in** that the armature (17) is provided with an extra-axial longitudinal bore (151), which is open towards the coupling rod (26) and the central longitudinal axis (152) of which extends at a radial distance (Δr) from the central longitudinal axis (23) of the valve (10), that disposed in the longitudinal bore (151) is a radial internal groove (28), the radial depth of which corresponds at least to the radial distance (Δr) of the longitudinal axes (23 and 152), and that the coupling rod (26) has a coupling flange (27), which is movable into positive engagement with the internal groove (28) and the diameter of which corresponds at most, and is approximately identical, to the diameter of the longitudinal bore (151).

15. Magnetic valve according to claim 14, **characterized in** that the bore (151) provided with the internal groove (28) opens into the interior space (143) of the armature (17) of the magnet system.

## Revendications

1. Vanne magnétique à trois positions (10) avec un système d'aimant à double lève (16) relié unilatéralement à la cage de la vanne (34) et qui comprend deux enroulements de commande (13, 14) disposés l'un à côté de l'autre le long d'un axe longitudinal central (23) de la vanne, dont l'excitation individuelle avec un courant de commande a pour effet de déplacer un induit (17), avec lequel un piston (18) de la vanne est couplé en mouvement par mécanique crabotée, par rapport à une position médiane centrée par ressort à laquelle correspond la position de base (0) de la vanne, dans d'autres positions orientées dans des directions opposées, qui sont associées aux autres positions de fonctionnement (I) et (II) de la vanne, et avec un dispositif d'actionnement (103) prévu pour une commande manuelle de la vanne, qui comprend deux éléments d'actionnement (104, 106) pouvant être déplacés par guidage suivant des axes s'étendant parallèlement à l'axe longitudinal central de la vanne et du système d'aimant et écartés l'un de l'autre, dont l'actionnement de commande individuel, réalisé respectivement dans la même direction, peut commander des déviations de l'induit du système d'aimant à double lève (16) effectuées dans d'autres directions - mutuellement opposées -, la force d'actionnement pouvant être amorcée en tant que force de commande par l'un des éléments d'actionnement (106) directement dans l'induit, tandis qu'il est prévu un dispositif de déviation (136, 149) pour amorcer la force de commande pouvant être produite par déplacement manuel de l'autre élément d'actionnement (104) dans l'induit, le dispositif de déviation inversant la direction d'attaque de la force de commande pouvant être exercée sur l'induit par rapport à la direction d'attaque de la force d'actionnement produisant le déplacement de l'élément d'actionnement, la vanne présentant en outre les caractéristiques suivantes :
a) il est prévu un étrier de guidage (136) de forme de base constante et en U s'engageant dans un creux (143) de l'induit (17), qui, avec au moins l'une de ses branches parallèles (137, 138), dont les axes centraux (133, 134) s'étendent parallèlement à l'axe longitudinal central (23) de la vanne (10) et du système d'aimant (16), est ancré de façon fixe dans une zone contenant le noyau polaire extérieur à distance de la vanne (61) du système d'aimant à double lève (16) de celui-ci;
b) l'étrier de guidage (136) supporte, sur un segment de l'une de ses branches de guidage (138) s'étendant à proximité de son arche (144) dans le creux (143) de l'induit (17), une rondelle d'appui déplaçable (126) entourant coaxialement cette branche et guidée sur celle-ci, qui, par l'intermédiaire d'un ressort à pression sous précontrainte (147), lequel entoure coaxialement le segment d'une branche d'étrier (138) s'étendant entre la rondelle d'appui (126) et une branche d'appui (129) de l'un des éléments d'actionnement (106) traversée par un alésage de guidage (141) dansla branche d'appui (129) de l'un des éléments d'actionnement (106), est appuyée, contre un élément d'actionnement (106), à distance variable ;
c) la rondelle d'appui (126) est en outre appuyée, contre l'autre élément d'actionnement (104), à distance invariable, par l'intermédiaire d'une enveloppe de support flexible (149), qui traverse la zone d'étrier s'étendant entre la rondelle d'appui (126) et une branche d'appui (128) de l'autre élément d'actionnement (104) qui entoure dans un ajustement glissant serré l'arche (144) et la zone se raccordant à celle-ci de l'autre branche de guidage droite (137), qui traverse également un alésage de guidage (139) de la branche d'appui (128) de l'autre élément d'actionnement (104) ;
d) le creux (143) de l'induit (17) dans lequel loge la rondelle d'appui (126) est relié à un alésage traversant (142) coaxial avec l'axe longitudinal central (23) de diamètre inférieur, à travers lequel l'étrier de guidage (136) s'engage dans le creux de l'induit (143), contre un rebord d'arrêt radial (127), dont l'espacement axial h, en position de base des éléments d'actionnement (104, 106) par rapport à la surface frontale (146) lui faisant face de la rondelle d'appui (126), correspond au moins à la course h' qu'effectue l'induit (17), lors de l'excitation de l'un de ses enroulements de commande à proximité de la vanne (14), pour atteindre sa position d'extrémité associée à la position excitée (II) de la vanne (10), dans laquelle l'induit (17) est appuyé contre un noyau polaire côté vanne (71) du système d'aimant à double lève (16) ;
e) la branche d'appui (128) de l'élément d'actionnement (104) appuyé à distance invariable contre la rondelle d'appui (126) est, dans sa position de base, disposée par rapport à la surface frontale annulaire lui faisant face (58) de l'induit (17), selon un espacement axial H₁, qui correspond au moins à la valeur h + h', et est déplaçable selon cette valeur minimum dans la direction de l'induit (17) et la branche d'appui de l'élément d'actionnement (106) appuyé contre l'induit (17) par l'intermédiaire du ressort à pression (147) est, dans sa position de base, disposée par rapport à la surface frontale annulaire lui faisant face (58) de l'induit (17), selon un espacement axial H₂, qui correspond au moins à la valeur h' et est déplaçable selon la course H₂ + h' dans la direction de la rondelle d'appui (126).

2. Vanne magnétique selon la revendication 1, caractérisée en ce que, en position médiane de l'induit (17) et en position de base des éléments d'actionnement (104, 106) du dispositif d'actionnement pouvant être commandé à la main (103), l'espacement h entre la rondelle d'appui (126) et le rebord d'arrêt (127) de l'induit (17) du système d'aimant à double lève (16), ainsi que l'espacement H₂ entre la branche d'appui (129) de l'élément d'actionnement (106) appuyé contre la rondelle d'appui (126) par l'intermédiaire du ressort à pression (147) et la surface frontale annulaire (58) lui faisant face de l'induit (17) ont approximativement ou exactement la valeur h' et l'espacement H1 entre la branche d'appui (128) de l'élément d'actionnement (104) appuyé contre la rondelle d'appui (126) à distance invariable et la surface frontale (58) lui faisant face de l'induit (17) a approximativement ou exactement la valeur 2h'.

3. Vanne magnétique selon la revendication 1 ou 2, caractérisée en ce qu'une surface d'appui radiale (122) du noyau polaire extérieur (61), contre laquelle est appuyé l'élément d'actionnement (104) appuyé contre la rondelle d'appui (126) à distance invariable, en position de base, est disposée selon un espacement par rapport à la surface frontale annulaire (58) lui faisant face de l'induit (17) supérieur comparé à une surface d'appui radiale (123) du noyau polaire extérieur (61), contre laquelle est appuyé l'élément d'actionnement (106) appuyé contre la rondelle d'appui (126) par l'intermédiaire du ressort à pression (147) du dispositif d'actionnement pouvant être commandé à la main (103) sur le noyau polaire extérieur (61) du système d'aimant à double lève (16).

4. Vanne magnétique selon l'une des revendications 1 à 3, caractérisée en ce que l'enveloppe de support (149) réalisant l'appui à distance invariable de la rondelle d'appui (126) contre l'élément d'actionnement (104, 128) prévu pour son déplacement, à l'état non actionné du dispositif d'actionnement pouvant être commandé à la main (103), présente une conception flexible au moins sur le segment longitudinal de l'étrier de guidage (136) comprenant l'arche recourbée (144) et une zone se raccordant à celle-ci orientée vers l'élément d'actionnement (104, 128) de longueur minimum h, et de préférence sur l'ensemble de la zone entre la rondelle d'appui (126) et l'élément d'actionnement (104, 128).

5. Vanne magnétique selon la revendication 4, caractérisée en ce que la partie flexible de l'enveloppe de support flexible (149) est conçue sous forme de ressort de traction avec des spires reposant sur le bloc.

6. Vanne magnétique selon la revendication 4, caractérisée en ce que la partie flexible de l'enveloppe de support flexible (149) est conçue par des segments circulaires directement l'un contre l'autre avec de préférence une courbure convexe de leur contour faisant face à l'étrier de guidage.

7. Vanne magnétique selon l'une des revendications 1 à 6, caractérisée en ce que la partie radialement intérieure, entrelaçant coaxialement les enroulements de commande (13, 14) d'une enveloppe aimantable (62) du système d'aimant à double lève (16) enveloppant totalement les enroulements de commande à l'extérieur et frontalement, comprend un segment d'enveloppe central (98), dans un matériau aimantable, qui englobe coaxialement l'induit (17) sur une majeure partie de sa longueur, des rondelles d'espacement (101, 102) disposées de façon fixe des deux côtés sur ce segment d'enveloppe (98), plus courtes dans la direction axiale, dans un matériau non aimantable, ainsi qu'un segment d'enveloppe (97) disposé de façon fixe sur la rondelle d'espacement intérieure (101) côté vanne, qui englobe coaxialement le noyau polaire intérieur (71) et un segment d'enveloppe extérieur (99) disposé de façon fixe sur la rondelle d'espacement extérieure (102), dans un matériau aimantable, qui englobe coaxialement le noyau polaire extérieur (61), le tube enveloppe (89) formé par les segments d'enveloppe aimantables (97, 98, 99) et les éléments d'espacement non aimantables (101, 102) étant conçu comme support pouvant être fixé à la cage de la vanne (34) pour les enroulements de commande (13, 14) et les autres parties de l'enveloppe aimantable (62) du système d'aimant à double lève (16), qui forment une unité de montage pouvant être fixée à la cage (34) de la vanne (10) et déplacée sur le tube enveloppe intérieur (89).

8. Vanne magnétique selon la revendication 7, caractérisée en ce que le noyau polaire côté vanne (71) peut être serré en vissant une bride d'extrémité (88) du tube enveloppe intérieur (89) dotée d'un filet extérieur dans un alésage fileté axial (91) de la cage de la vanne (34) contre un étage radial (84) de la cage de la vanne (34) selon une disposition coaxiale avec l'axe longitudinal central (23) de la vanne (10).

9. Vanne magnétique selon la revendication 7 ou 8, caractérisée en ce que l'unité de montage formée par les enroulements de commande (13, 14) et les éléments radialement extérieurs de enveloppe magnétisable (62) peut être fixée à la cage de la vanne (34) au moyen d'un écrou d'accouplement (153), qui est en relation d'engagement positif avec un filet extérieur (154) prévu sur un segment libre extérieur (156) du segment d'enveloppe extérieur (99) du tube enveloppe intérieur (89).

10. Vanne magnétique selon l'une des revendications 7 à 9, caractérisée en ce que le segment d'enveloppe aimantable axialement extérieur (99) du tube enveloppe intérieur (89) du système d'aimant à double lève (16) est doté d'une paroi de séparation stable (108), qui délimite une zone intérieure en forme de pot (109) qui reçoit le noyau polaire extérieur (61), par rapport à une zone extérieure en forme de pot (111), dans laquelle une plaque de recouvrement (112) peut être encastrée de façon à affleurer, dont le raccord de montage avec le noyau polaire (61), réalisé par des vis de tension, permet de fixer celui-ci dans le tube enveloppe intérieur (89) selon une position définie.

11. Vanne magnétique selon la revendication 10, caractérisée en ce que l'étrier de guidage en U (136) est ancré de façon fixe avec ses deux branches parallèles (137, 138) dans des alésages longitudinaux (131, 132) du noyau polaire extérieur (61), dont les axes longitudinaux (133, 134) s'étendent dans un plan radial comprenant l'axe longitudinal central (23) de la vanne magnétique (10) et selon des espacements radiaux identiques (a/2) par rapport à celui-ci, et en ce que les éléments d'actionnement comportent des poussoirs d'actionnement (104, 106) très allongés et en forme de barres, qui sont guidés de façon à pouvoir se déplacer axialement dans des alésages alignés les uns avec les autres (113, 113' et 113", et 114, 114' et 114") du noyau polaire extérieur (61), de la paroi de séparation (108), du segment d'enveloppe aimantable extérieur (99) du tube enveloppe intérieur (89) et de la plaque de recouvrement (112) comprise dans sa zone en forme de pot (111), les alésages respectivement alignés les uns avec les autres (113, 113' et 113", et 114, 114' et 114") étant ce faisant disposés radialement à l'extérieur des alésages de réception (131, 132) du noyau polaire (61) pour les branches parallèles (137, 138) de l'étrier de guidage en U(136) avec un profil coplanaire de leurs axes longitudinaux centraux (116, 117) avec les axes longitudinaux centraux (137, 134) des alésages de réception (131, 132) du noyau polaire extérieur (61).

12. Vanne magnétique selon la revendication 11, caractérisée en ce que les extrémités libres des poussoirs d'actionnement (104, 106) sont disposées de façon à affleurer dans les alésages de guidage (113", 114") de l'élément de recouvrement (112).

13. Vanne magnétique selon la revendication 11 ou 12, caractérisée en ce que le diamètre D d'un alésage traversant (142) de l'induit (17), à travers lequel passe l'étrier de guidage (136) dans le creux allongé radialement par rapport à celui-ci (143) de l'induit (17), satisfait à la relation D > a + d₁ + d₂, dans laquelle a définit l'espacement entre les axes centraux (133, 134) des alésages d'ancrage (131, 132) pour les branches parallèles (137, 138) de l'étrier de guidage (136), d₁ définit leur diamètre et d₂ définit l'épaisseur radiale de la rondelle d'appui (126) et sous réserve que la somme de l'épaisseur du fil du ressort à pression (147) et de l'épaisseur radiale de l'enveloppe de support (149) entourant l'arche (144) de l'étrier de guidage (136) soit inférieure à l'épaisseur radiale d₂ de la rondelle d'appui (126).

14. Vanne magnétique selon l'une des revendications 1 à 13, dans laquelle le piston (18) de la vanne (10) est couplé à l'induit (17) du système d'aimant (16) prévu pour la commande électrique, par l'intermédiaire d'une tige d'accouplement (26), par engagement positif de façon à ne pas pouvoir se déplacer axialement, l'induit (17) et la tige d'accouplement (26) étant disposés dans une disposition coaxiale par rapport à un axe longitudinal central (23) de la vanne (10) dans un tube (89), qui ne peut être amené dans la disposition entourant coaxialement ces éléments qu'après un alignement coaxial de la tige d'accouplement (26) et de l'induit (17), caractérisée en ce que l'induit (17) est doté d'un alésage longitudinal désaxé (151) ouvert du côté de la tige d'accouplement (26), dont l'axe longitudinal central (152) s'étend par rapport à l'axe longitudinal central (23) de la vanne (10) selon un espacement radial (Δr), en ce qu'une rainure intérieure radiale (28) est disposée dans l'alésage longitudinal (151), dont la profondeur radiale correspond au moins à l'espacement radial (Δr) des axes longitudinaux (23 et 152) et en ce que la tige d'accouplement (26) comporte une bride d'accouplement (27) pouvant être reliée à la rainure intérieure (28) par engagement positif, dont le diamètre correspond au maximum au diamètre de l'alésage longitudinal (151) et est approximativement identique à celui-ci.

15. Vanne magnétique selon la revendication 14, caractérisée en ce que l'alésage (151) doté de la rainure intérieure (28) débouche dans le creux (143) de l'induit (17) du système d'aimant.
